Europäisches Patentamt

European Patent Office

Office européen des brevets

(19)

(11) Publication number: 0 104 742
A2

# (12) EUROPEAN PATENT APPLICATION

(21) Application number: 83304751.7

(22) Date of filing: 17.08.83

(51) Int. Cl.³: **A 21 D 13/00**

(30) Priority: 01.09.82 US 413887

(43) Date of publication of application:
04.04.84 Bulletin 84/14

(84) Designated Contracting States:
BE DE FR GB IT LU NL

(71) Applicant: SCHWAN'S SALES ENTERPRISES, INC.
115 West College Drive
Marshall Minnesota 56258(US)

(72) Inventor: Ricke, Roy E.
934 Marymount
Salina Kansas 67401(US)

(74) Representative: Cheyne, John Robert Alexander
Mackenzie et al,
HASELTINE LAKE & CO. 28 Southampton Buildings
Chancery Lane
London WC2A 1AT(GB)

(54) Laminate Chicago-style or thick pizza crust.

(57) A method for producing a laminate baked Chicago-style or thick-crust product comprises formulating dough, mixing the dough, sheeting the dough, providing a fat layer, rolling the dough sheet, cutting the dough roll, proofing, pressing and baking the dough. The product is suitable for topping followed by freezing, packaging, and sale of the pizza to the home consumer market.

EP 0 104 742 A2

## LAMINATE CHICAGO-STYLE OR
## THICK PIZZA CRUST

### Field of the Invention

The invention relates to baked pizza crusts having improved properties for the home consumer pizza market and their manufacture.

### Background of the Invention

A new style of pizza making has become popular across the country, called "deep dish" or "Chicago-style" pizza. This style of pizza is characterized by a thick crust and a deep layer of pizza topping which is baked in a pan having a depth of about an inch and a half. Regular thin crust pizza is commonly baked in very shallow pans (less than about 1/4 inch) or directly on the baking surface of an oven. Thick crust pizza or Chicago-style pizza has become extremely popular since the pizza tends to be more hearty, the dough tends to be more flavorable, and the pizza tends to be of a sort that is eaten with a knife and fork rather than with the fingers.

Pizza crusts have been made by compounding a dough mass, sheeting the dough mass into a thin dough sheet and cutting the sheet into pizza shaped sections using a variety of cutting means. After cutting, pizza sections were either partially or fully baked to provide mechanical strength. The baked pizza sections were topped with pizza condiments, tomato sauce, vegetables, meats, cheese and spices, were quick-frozen and maintained frozen until sale. Early frozen pizzas were commonly less desirable than those made at home from basic ingredients or those purchased in pizzerias. Very often the early frozen pizzas after baking had a tough, hard texture, a brittle, cracker-like texture, or became moist or soggy after baking. Substantial consumer resistance has resulted from the undesirable texture and flavor characteristics of these early crusts.

Many of the objections to the early pizza crusts were dealt with in the development of fried pizza crusts. Fried pizza crusts are commonly made by providing a sheet of dough, forming circular or substantially circular pizza shaped sections from the dough sheet, adapting the pizza sections for frying, and cooking the dough sections by immersing them in hot oil until cooked. The cooked shells are topped with meat, vegetables, sauce, cheese, and pizza condiments are frozen and stored for sale. Fried crusts tend to be crispy and light in texture when compared to earlier baked pizza shells. However some consumer resistance to pizza fried crusts has occurred. The crusts are fried in oil and retain a substantial amount of oil after frying. The mouth feel and taste of the oil in the crust is viewed by some consumers to be a drawback. Further, certain consumers find that fried crusts are too crispy and do not compare favorably with pizzeria or home made pizza crusts.

Accordingly, a substantial need has arisen for providing a process for forming deep dish or Chicago-style pizza crusts that when baked at home are tasty, non-oily, have a controlled laminate, light texture, and bake to a crust with substantial mechanical integrity.

Brief Description of the Invention

Briefly, the Chicago-style laminate crust is made by mixing or blending dough ingredients to form a leavened dough mass, forming the dough mass into a rough sheet-like form, sheeting the dough into a thin dough web onto which a laminating fat such as margarine or oil is placed, rolling the dough sheet into a double or single roll, cutting the roll into portions, proofing the dough portion, and pressing the proofed dough portion into a pizza shell. The laminated pizza shell is then baked prior to topping and freezing. We have found that applying fat to the sheet before the dough is rolled creates a number of laminations or layers that after pressing results in a flaky, easily-baked, tasty, non-soggy crust having substantial mechanical integrity. The crust can be baked, topped, frozen, and reheated at home substantially without having the drawbacks common in frozen pizza manufacture. It is this combination of sheeting, application of fat, rolling, cutting, proofing and pressing which provides the unique and remarkable properties of the pizza shell. These elements cooperate together to provide a high quality shell. None of these elements can be eliminated without substantial deterioration in the shell quality.

While there are numerous references which teach a variety of dough manipulation steps or pizza making processes, to the best of my knowlewdge, there is no reference which teaches or suggests that pizza dough can derive the unusually improved properties from the overall process steps as outlined above.

### Detailed Description of the Invention and Preferred Embodiments

The Chicago-style laminated crust of this invention is made by mixing ingredients for a dough, forming a dough sheet by extruding the dough into a dough web and/or sheeting the web into a thin sheet of dough, applying margarine or other fat on the sheet, rolling the sheet into a single or double roll, cutting the roll into dough slices, proofing the dough slices, pressing the slices into a shell, and baking the shell.

### Compounding the Dough Mixture

Dough used in the practice of this invention can be yeast leavened. Formulating yeast leavened dough is well known in the baking arts. It is well established that for leavening to take place water, yeast and some nutritive material to sustain the yeast activity are necessary. This nutritive material can be sugars or saccharides within the dough or can be added sugar material, such as sucrose, malt syrup, maltodextrins, corn syrup, or other yeast-food carbohydrate sources. A wide variety of yeasts are commonly available for use in the yeast leavening doughs. Commercially available yeasts are commonly dry or compressed. When using compressed yeast it is common practice in mixing the dough to adjust the temperature of the water added to the flour so that the temperature of the dough at the end of the mixing period is sufficient to activate the yeast (about 80-100° F. or 25-40° C.). When using dry yeast, it is common practice to hydrate the yeast in water having an elevated temperature of up to about 150° F. (about 65° C.) for purposes of activating the yeast. The temperature of the balance of the other ingredients including additional water, flour, sugars, oil, etc. added to the dough can be adjusted so that the temperature of the dough at the end of the mixing period is such that the action of the yeast is not harmed, commonly at least 60° F. (16° C.), preferably 80-100° F. (25-40° C.) or higher. However the temperature of the dough cannot become so high (substantially greater than about 150° F., or 65° C.) that the yeast is denatured preventing proper dough leavening. In order to improve the handling characteristics of the dough, dough conditioners and other additives are often added to the dough mass.

A preferred composition for the dough comprises wheat flour, water, yeast, sugar, salt, vegetable oil, and dough conditioners. In one method, all of the ingredients can be blended together for a sufficient period to result in a well shortened but nontough or nonglutinous mass. After blending the dough can be held at about 80-100° F. (25-40° C.) for about 30 minutes in order to activate the yeast. Alternatively, sugar, water and yeast can be blended into a beer at about 80-100° F. for about 30 minutes in order to activate the yeast. After activation the flour, salt, oil and other ingredients can be added to the yeast beer and blended until the dough is shortened but not tough.

Common rotary or industrial blenders can be used such as batch mixers or continuous mixers. Using batch mixers, which are well known in the commercial baking field, batches ranging from about 200 to 3000 lbs. (about 90-1350 kg) per batch can be made. Alternatively, using a continuous dough mixer, having the ingredients added to the mixer continuously at proper ratios, the continual production of dough can be expected in the range of about 900 to 4000 lbs. (about 405-1800 kg) of dough per hour. In operating continuous dough blending systems, the ingredients must be added to a mixer in the appropriate ratios and rates.

### Forming Dough Sheet

The fully mixed dough is transferred to means for forming a relatively thin, continuous dough web having approximate dimensions between about 20 to 60, preferably 25 to 35 inches (about 50 to 150 cm, preferably 60 to 90 cm) in width and a depth of from about 1/8 to 1 inch (about 3 to 25 mm), preferably about 1/4 to 3/4 inch (about 7 to 20 mm). A variety of devices for forming a dough web which can be used are available, including screw-type or piston-type devices for extruding the dough under pressure from an extrusion orifice. The extrusion orifice can be generally of the size, or slightly smaller than, the desired dimensions of the dough web. A highly desirable extruder is one that can provide dough under pressure while receiving recycled dough pieces that are left after the pizza shaped sections are cut from the web. A variety of configurations of screw-driven extruders are available. Commonly the extruded dough web is extruded onto an endless belt conveyor system and can optionally be sheeted to a precise width and depth. A variety of patents discuss extrusion and sheeting of dough materials such as U.S. Patent Nos. 3,276,397, 3,973,895, 4,046,940, 4,056,346, 4,113,412, 4,113,819, 4,192,636, and 4,266,920, which are hereby expressly incorporated by reference herein.

### Laminating Fat Addition

Onto the sheeted dough web fat can be applied to promote lamination or layer formation. Fat substances that can be used are food grade solid or liquid fatty substances which are suitable to produce separate laminate layers of dough in the finished pizza shell. Examples of fats that can be useful in forming the laminate structure include butter, margarine, corn oil, coconut oil, peanut oil, soybean oil, lard, etc. Polyunsaturated, partly hydrogenated, or highly saturated fat can be used. Solid fats can be melted and can be extruded onto the sheet as a plastic mass, painted on or deposited on the sheet in drops or as a spray. Fats which are liquid or semi-liquid at room temperature can be extruded, painted, dropped, or sprayed onto the dough web as it passes. Preferably, solid fat can be formed into chips having approximate dimensions of about 1 to 5 mm, preferably 1 mm in depth and about 5 to 15 mm, preferably 10 mm on a side. The solid chipped fat can be sprinkled onto the dough web using a variety of means for solids deposition.

Sufficient fat is applied to the dough web to result in the formation of the laminate structure after baking. An amount sufficient to provide the laminate structure comprises about 2 to 15 parts of fat per each 90 parts of dough, preferably, for reasons of economy and lamination control about 3 to 10 parts of fat per each 90 parts of dough can be used. One benefit of the fat application is the improved flavor that can be derived from the fat. U.S. Patent No. 3,276,397 teaches one method for extruding a continuous layer of liquid fat on the pizza dough.

### Rolling of the Dough

After the fat is introduced onto the surface of the dough web, the dough web can be rolled into a single or double roll form. The dough can be rolled using a variety of methods. One preferred method is to roll the dough using a roller mechanism placed over the conveyor of the dough web. The roller mechanism is placed at an angle across the conveyor so that one corner of the leading edge of the dough web contacts the roller where, due to the action of the roller turning in a direction opposite of the conveyor, the dough web will be turned up and coiled back upon itself by the combined action of the moving belt and the rotating roller. It has been found in the practice of the present invention that the peripheral speed of the roller where engaged by the dough is desirably somewhat greater than the linear speed of the dough conveyor. In this way the roll can be made with multiple layers. For example, if the speed of the belt is approximately 40 feet per minute (about 12 meters per minute), the speed of the roller may be in an angular measure greater than 40 feet per minute and can be as much as 60 feet per minute or greater (about 12 to 20 meters per minute or greater). Thus as the dough strip begins to be coiled by the joint action of the belt and the roller, the coiled dough will rotate due to the greater speed of the roller and the fact that the surface of the roller is adapted to provide adhesion between the roller and the dough web. Consequently the dough web can be coiled back upon itself faster than it can move along the conveyor.

As the dough sheet moves along in the direction of motion of the conveyor, the dough web is coiled throughout its width, the dough emerges as a continuous roll under the advancing influence of the belt. Preferably, the speed of the belt and the speed of rotation and orientation of the roller can be adjusted so that the dough roll has from 2 to 7 layers of dough, preferably about 3 to 5 layers of dough, most preferably for reasons of substantial lamination and optimum flakiness of the product, about 4 to 5 layers of dough counting from the center to the outside of the roll along a radius. Alternatively, the dough web can be cut into individual lengths of dough which can be individually rolled with a roller on the conveyor into discrete rolls.

In order to make a continuous double roll form of dough, two distinct rollers can be used on either side of a conveyor to produce a double sided roll in the center of the conveyor.

<div align="center">Cutting</div>

After the dough is rolled into a single or double roll it is passed into a means for dividing, cutting or severing the single or double dough roll into single or double sections. The dimensions of the cylindrical sections depends on the width of the dough roll and the rate the roll is cut by the dough machines. However the cut piece of the dough should contain sufficient material to form a full pizza section.  Commonly from about 3 to 12 oz. (about 85 to 350 gms) of dough is used depending on the shape and size of the final pizza shell, however for a shell having a diameter of about 10 to 12 inches (about 25 to 30 cm) and a thickness of about 3/16 to 3/8 inches (about 5-10 mm) about 4 to 10 oz. (about 110 to 280 gms) of dough can be required.  The dough roll can be cut by hand or using automatic equipment including rotary knives or a guillotine blade placed on the conveyor system.  Means for forming the dough roll and cutting the rolled dough is shown in U.S. Patent Nos. 2,352,617 and 3,276,397 which are hereby expressly incorporated by reference herein.

### Proofing

After cutting, the dough cylinders are proofed or raised, for about 2 to 20 minutes, at an elevated temperature sufficient to activate the yeast microorganisms, commonly about 80 to 150° F. (about 25 to 70° C.).  The proofing is commonly done using a variety of means including proofing chambers through which the conveyed dough cylinders pass, alternatively the dough cylinders can be placed on pizza shaped pans which are conveyed into a thermostatted proofing chamber or conveyed into a "pocket proofing machine" in which the dough sections are maintained at a proofing temperature within a small "pocket" container.

### Pressing

After proofing the dough sections are pressed into the Chicago-style or thick laminate crust pizza dough sections having dimensions of about 10 to 14 inches (about 25 to 36 cm), preferably about 10-1/2 to 12 inches (about 27 to 31 cm) in diameter and about 3/16 to 3/4 inches (about 5 to 24 mm), preferably 3/16 to 1/2 inch (5 to 14 mm) in thickness.  The dough sections can have an optional raised edge that extends about 1/8 to 1 inch (about 3 to 25 mm) above the crust bottom.

Any conventional apparatus can be used to form the Chicago-style or thick laminate crust pizza section.  However a preferred method comprises coating the dough roll section with oil and pressing the coated dough roll into pizza shape sections in a pan having the desired approximate dimensions of the pizza section.

The pan used to press the pizza can be made of any material that will not harm the dough sections and can be coated with a nonstick coating to permit removal of the dough sections from the pan after baking. The pressing can occur at somewhat elevated temperatures, at sufficient pressure to distribute the dough evenly throughout the sections of the pan and to form an edge if desired. Commonly pressures of about 1 to about 10 lbs. per square inch and temperatures from about ambient (70° F.) to about 100° F. (about 20 to 40° C.) are useful for pressing the dough. The dough presses can contain a variety of optional features including compressed air orifices useful for removing the dough, auxiliary heaters, sprayers for oil, embossers to emboss the dough with wedged shapes to facilitate cutting, and other features useful in the manufacture of the dough section.

After pressing the dough section can be preferably reproofed at an elevated temperature for a period of about 1 to about 20 minutes and can be repressed. This additional proofing and pressing step can add texture and increased laminate structure to the dough.

### Baking

After the dough sections are pressed they can be baked at an elevated temperature until the pizza section is fully cooked. Commonly the dough sections are baked at temperatures from about 200 to 375° F. (about 95-200° C.) for a period of time until the crust is browned and is mechanically strong enough to undergo topping, wrapping and freezing, commonly from about 2 to 30 minutes.

The following is an operating Example which includes a preferred embodiment.

### Example 1

The recipe for the pizza dough is as follows:

| | |
|---|---|
| Wheat flour | 54.93 parts by weight |
| Water | 25.82 parts by weight |
| Krystal-Gold margarine chips | 10.44 parts by weight |
| Yeast | 4.39 parts by weight |
| Soybean oil | 2.20 parts by weight |
| Sugar (sucrose) | 1.10 parts by weight |
| Salt | 0.99 parts by weight |
| Melo-dough dough conditioner | 0.14 parts by weight |

An aqueous yeast beer is made by mixing the yeast, sugar, and about 10% of the total water, having a temperature of about 80° F. The aqueous mixture is blended until uniform, the pH is adjusted to about 4.5 and the temperature is maintained at 80° F. until the yeast is fully activated into its growth phase (about 30 minutes). Into a commercial rotary mixer is placed the yeast beer, the flour, the balnce of water, the soybean oil, the salt, and the Melo Dough, a dough conditioner. The mixture is mixed, in a horizontal Peerless Ribbon mixer, at a high machine speed for 2 minutes and at a low machine speed for 3 minutes, resulting in a shortened dough which is not tough or glutinous in texture. The dough is removed from the mixer and is placed in an extruder which extrudes the dough onto a moving conveyor, into a dough web having approximate dimensions of about 3/4 inch thick and a width of about 30 inches. Onto the sheet is sprinkled margarine chips (Krystal Gold - Durkee Company) at a rate of about 10 lbs. of margarine flakes per 90 lbs. of dough. After the addition of margarine chips the sheet is rolled into a double roll, each roll having four layers counting from the center of the roll to the outside along a radius. The rolled dough is cut using a guillotine cutter into sections having a weight of about 7.4 oz. The thus-cut sections are coated with soybean oil and are transferred onto a pocket proofer for a first proofing at 80° F. for 30 minutes. After proofing the sections are transferred to pans and are pressed into shells having a diameter of 11 inches and a thickness of 1/4 inch. The pizza shells in the pan are again proofed at about 80° F. for 30 minutes, are repressed to the above dimensions, and are then baked at 375° for ten minutes. The resulting pizza shell was golden brown in color, was firm, had distinct laminated layers in the dough, was tasty, had mechanical integrity, supported pizza toppings, and could be frozen, wrapped and reheated easily. Most importantly, the taste and mouth feel of the rebaked pizza baked under conditions similar to that found at home, was acceptable and resembled pizzeria and homemade pizza shells in taste, texture, color and flavor.

The above discussion and Example are illustrative of the invention, however since many embodiments and variations can be made without departing from the spirit and scope of the invention, the invention resides solely in the claims hereinafter appended.

CLAIMS

1. A laminate Chicago-style or thick pizza crust which comprises the product of the steps of:

(a) forming a dough sheet,

(b) applying a lamination providing amount of fat to the dough sheet to form a fat coated sheet,

(c) forming the fat coated sheet into a single or double rolled sheet,

(d) cutting the rolled sheet into dough portions,

(e) proofing the dough portions forming proofed dough portions, and

(f) forming the proofed dough portions into a pizza shell having a thickness of at least 55 mm.

2. The laminate pizza crust of claim 1 wherein the dough used in forming the dough sheet of step 1 (a) is made by first formulating a beer comprising yeast, sugar, and water heated to an elevated activating temperature, and combining the yeast beer after activation with additional dough components.

3. The laminate pizza crust of claim 1 wherein the dough sheet formed in step 1 (a) has dimensions of about 50 to 150 mm in width and 2 to 15 mm in depth.

4. The laminate pizza crust of claim 1 wherein the dough sheet formed in step 1 (a) has dimensions of about 60 to 90 mm in width and 3 to 10 mm in depth.

5. The laminate pizza crust of claim 1 wherein the fat applied to the dough sheet in step 1 (b) comprises solid fat particles.

6. The laminate pizza crust of claim 5 wherein the solid fat particles are margarine flakes having dimensions of about 1 to 15 mm in depth and 5 to 15 mm on a side.

7. The laminate pizza crust of claim 1 wherein about 2 to 15 parts of fat are applied to the dough sheet per 90 parts of dough.

8. The laminate pizza crust of claim 7 wherein about 3 to 10 parts of fat are applied per each 90 parts of dough.

9.    The laminate pizza crust of claim 1 wherein in step 1 (c) the fat coated sheet is formed into a single roll having from about 2 to 7 layers of dough counting from the center to the edge along a radius.

10.    The laminate pizza crust of claim 1 wherein in step (c) the fat coated sheet is formed into a double roll having from about 2 to 7 layers of dough counting from the center to the edge along a radius.

11.    The laminate pizza crust of claim 1 wherein the dough portions of step 1 (d) are about 85 to 350 gm in weight.

12.    The laminate pizza crust of claim 1 wherein the dough portions are about 110 to 280 gm in mass.

13.    The laminate pizza crust of claim 1 wherein in step 1 (e) the dough portions are proofed at 80° to 150° C. for 2 to 20 minutes.

14.    The laminate pizza crust of claim 1 wherein in step 1 (f) the proofed dough portions are pressed into a pizza shell having a diameter of about 25 to 36 cm.

15.    The laminate pizza crust of claim 14 wherein the diameter of the pizza shell is 27 to 31 cm.

16.    The laminate pizza crust of claim 14 wherein the pizza shell has a vertical raised edge that extends about 3 to 25 mm above the crust.

17.    The laminate pizza crust of claim 1 wherein the pizza shell formed in step 1 (f) is baked at 95° to 200° C. for 2 to 30 minutes.

18.    A pizza comprising the crust formed in claim 17 having pizza toppings selected from the group consisting of cheese, meat, tomato sauce, pizza condiments, and mixtures thereof.

19. A process for making a laminate Chicago-style or thick pizza crust from dough, characterized in that the process comprises:

a) forming a dough sheet,

b) applying a lamination providing amount of fat to the dough sheet to form a fat coated sheet,

c) forming the fat coated sheet into a single or double rolled sheet,

d) cutting the rolled sheet into dough portions,

e) proofing the dough portions forming proofed dough portions, and

f) forming the proofed dough portions into a pizza shell having a thickness of at least 55 mm.